# EUROPÄISCHE PATENTSCHRIFT

(11) **EP 1 645 470 B1**
(45) Veröffentlichungstag und Bekanntmachung des Hinweises auf die Patenterteilung: **08.10.2008**
(21) Anmeldenummer: 05017450.7
(22) Anmeldetag: 11.08.2005
(51) Int. Cl.: B60R 1/074

(54) **Kraftfahrzeug mit einem Aussenspiegel**
Rear view mirror for a vehicle
Rétroviseur extérieur pour véhicule

(30) Priorität: 30.09.2004 DE 102004047535
(43) Veröffentlichungstag der Anmeldung: 12.04.2006
(73) Patentinhaber: GM Global Technology Operations, Inc., Detroit, MI 48265-3000 (US)
(72) Erfinder: Diehl, Peter G, 65421 Gross-Gerau (DE); Kanning, Torsten, 65346 Eltville/Erbach (DE)
(74) Vertreter: Daniel, Ulrich W.P.

(56) Entgegenhaltungen:
- WO-A-02/46000
- DE-A1- 3 926 892
- DE-A1- 10 353 453
- DE-A1- 19 820 786

## Beschreibung

Die Erfindung bezieht sich auf einen Kraftfahrzeug mit einem Außenspiegel, der ein Gehäuse zur Aufnahme eines mittels eines elektrischen Antriebes verschwenkbaren Spiegelglases mit einer Spiegelfläche , einem Regensensor und mindestens einem Steuergerät, das mit dem Antrieb gekoppelt ist.

Aus der Praxis ist es bekannt, an einem Kraftfahrzeug fahrer- bzw. beifahrerseitig einen Außenspiegel anzuordnen, dessen Spiegelglas mittels eines elektrischen Antriebes verstellbar ist. Des Weiteren ist es insbesondere bei hochwerteigen Ausstattungsvarianten von Kraftfahrzeugen zunehmend üblich die Außenspiegel mit einem Klappmechanismus auszustatten, um die Außenspiegel beim Parken oder beim Transport eines Kraftfahrzeuges aus ihrer Gebrauchsposition in eine Parkposition zu klappen, in der das Spiegelglas parallel zu einer Längsachse des Kraftfahrzeuges ausgerichtet ist.

Die DE 39 26 892 A1 zeigt einen Außenspiegel für ein Kraftfahrzeug mit einer in einem einseitig offenen Spiegelgehäuse angeordneten Spiegelscheibe und einer an einer Seitenwand des Kraftfahrzeugs befestigten Halterung, an der das Spiegelgehäuse um eine etwa senkrechte Achse z.B. in eine Parkstellung schwenkbar gelagert ist. Das Spiegelgehäuse ist in einem der Schwenkachse abgekehrten Bereich durch eine bogenförmige verzahnte Führung geführt. Der Verzahnung der Führung ist ein antreibbares Ritzel in der Weise zugeordnet, dass durch Drehen des Ritzels das Spiegelgehäuse verschwenkbar ist.

Des Weiteren ist aus der unveröffentlichen Anmeldung (Aktenzeichen DE 103 53 453.9-51) ein anklappbarer Außenspiegel für ein Kraftfahrzeug mit einem einseitig offenen Spiegelgehäuse und einem darin befindlichen, in verschiedenen Positionen einstellbaren Spiegel bekannt. Der Außenspiegel weist einen Klappmechanismus auf, der im angeklappten Zustand die offene Seite des Spiegelgehäuses an eine angrenzende Seitenscheibe des Kraftfahrzeugs anlegt. Der Klappmechanismus bewirkt unter anderem, dass das Spiegelgehäuse um mindestens zwei Achsen bezüglich eines x-y-z Koordinatensystems klappbar bzw. drehbar ist. Der Außenspiegel hat sich unter anderem dahingehend bewährt, als ein verbesserter Schutz des Spiegels im angeklappten Zustand des Außenspiegels gegen Witterungseinflüsse und Staub sowie Verschmutzung bzw. Beschädigung erreicht wird.

Es ist Aufgabe der Erfindung, ein Kraftfahrzeug der eingangs genannten Art zu schaffen, dessen Außenspiegel mit einfachen Mitteln und kostengünstig vor Verschmutzung geschützt ist.

Erfindungsgemäß wird die Aufgabe dadurch gelöst, dass das Steuergerät den Antrieb bei Regen und abgestelltem Kraftfahrzeug derart ansteuert, dass die Spiegelfläche zum Schutz vor auftreffendem Regen horizontal aus einer Gebrauchsposition in eine Schutzposition verschwenkt wird.

Aufgrund dieser Maßnahmen umfasst das Kraftfahrzeug einen Außenspiegel mit einer Klappfunktion, die bei abgestelltem, also geparkten Kraftfahrzeug eine Verschmutzung des Spiegelglases durch auftreffenden Regen verhindert, da der Außenspiegel mit seinem Spiegelglas in Richtung zum Boden gedreht wird. Dies trägt zur Erhöhung der Verkehrssicherheit bei, da die Sicht des Fahrers nach hinten nict durch angetrocknete Regentropfen beeinträchtigt ist. Selbstverständlich kann auch das Gehäuse des Außenspiegels um eine senkrecht zu einer Fahrzeuglängsachse ausgerichteten Querachse derart verdreht werden, dass die Öffnung des Gehäuses in Richtung des Bodens orientiert ist. Die Bedingungen, das das Kraftfahrzeug abgestelt ist, werden beispielsweise von dem Steuergerät ermittelt.

In Ausgestaltung der Erfindung verschwenkt der Antrieb das Gehäuse in eine Parkposition, in der eine Öffnung des Gehäuses für das Spiegelglas parallel zur Fahrzeuglängsachse ausgerichtet ist. Hierbei kann das Spiegelglas entsprechend tief in dem Gehäuse aufgenommen sein, um seine Ausrichtung zum Boden in der Parkposition zu gewährleisten. Zweckmäßigerweise verschwenkt der Antrieb zuerst die Spiegelfläche in die Schutzposition und anschließend das Gehäuse in die Parkposition oder umgekehrt.

Bevorzugt ist dem Antrieb und/oder dem Regensensor eine durch ein Steuersignal aktivierbare und/oder deaktivierbare Auswerte- und/oder Steuereinheit zugeordnet, die bei einer Aktivierung das Verschwenken in die Schutzposition und/oder die Parkposition zulässt. Das Steuersingal kann beispielsweise von einer mit dem Regensensor gekoppelten Komfortelektronik gesendet werden, die bei auftretendem Niederschlag Seitenscheiben oder ein Schiebedach des Kraftfahrzeuges schießt. Aufgrund des an der Auswerte- und/oder Steuereinheit anliegenden Steuersignals, das auf Regen hinweist, wird der Antrieb zum Verschwenken des Außenspiegels in die Schutzposition angesteuert.

Nach einer Weiterbildung der Erfindung aktiviert oder deaktiviert das Steuersignal die Auswerte- und/oder Steuereinheit in Abhängigkeit von einer Schaltstellung eines Schalters oder einer Einstellung eines Bordcomputers. Damit hat ein Benutzer des Kraftfahrzeuges die Möglichkeit, die Auswerte- und/oder Steuereinheit mittels eines separat im Fahrzeuginneneraum zu installierenden Schalters oder durch eine entsprechende Programmierung ein- bzw. auszuschalten. Bei einer eingeschalteten Auswerte- und/oder Steuereinheit wird der Außenspiegel bei von dem Regensensor detektierten Niederschlag in die Schutzposition überführt. Günstig im Sinne der Erfindung ist, wenn dem elektrischen Antrieb eine Auswerte- und Steuereinheit zugeordnet ist, die manuell aktivierbar und/oder deaktivierbar ist, so dass die Auswerte- und Steuereinheit im aktivierten bzw. deaktivierten Modus den elektrischen Antrieb mit einem entsprechenden Steuersignal dazu veranlasst den Außenspiegel in die Schutzposition bzw. in die Gebrauchsposition zu überführen. Die Auswerte- und Steuereinheit ist vorzugsweise als Regensensor ausgestaltet, der das entsprechende Steuersignal bei Niederschlag erzeugt, so dass der elektrische Antrieb veranlasst wird, den Außenspiegel in die Schutzposition zu überführen. Der Regensensor ist in herkömmlicher Weise in ein Steuersystem des Kraftfahrzeugs eingebunden und ermittelt die Außenwitterung des Kraftfahrzeugs vorzugsweise zeit zyklisch. Stellt der Regensensor bei seinen Außenwitterungsabfragen Niederschlag fest, wird ein entsprechendes Steuersignal erzeugt, das den elektrischen Antrieb veranlasst den Außenspiegel in die Schutzposition zu überführen. Wird die Auswerte- und Steuereinheit deaktiviert, und/oder detektiert die Auswerte- und Steuereinheit eine Beendigung des Niederschlags, wird der elektrische Antrieb selbstverständlich veranlasst den Außenspiegel aus der Schutzposition in die Gebrauchsposition zu überführen.

Üblicherweise sind die derzeit auf dem Markt befindlichen Kraftfahrzeuge mit einer Zentralverriegelung ausgestattet. Sinnvoll ist daher, wenn die Auswerte- und Steuereinheit aktiviert wird, wenn das Kraftfahrzeug verriegelt wird. Wird das Kraftfahrzeug entriegelt ist vorgesehen, dass die Auswerte- und Steuereinheit deaktiviert wird.

Möglich ist aber auch, dass die Auswerte- und Steuereinheit mit einem Zündschalter des Kraftfahrzeugs zusammengeschaltet wird. Zweckmäßiger Weise wird die Auswerte- und Steuereinheit aktiviert, wenn der Zündschalter auf eine Ausschaltposition gestellt wird. Um zu vermeiden, dass der Außenspiegel bei Niederschlag unmittelbar nach Ausschalten des Kraftfahrzeugs in die Schutzposition überführt wird, ist vorteilhafter Weise vorgesehen, dass die Auswerte- uns Steuereinheit zeitverzögert (timergesteuert) nach dem Ausschalten des Kraftfahrzeugs aktiviert wird. Dies ist deswegen vorteilhaft, da das Kraftfahrzeug beispielsweise kurzfristig vor Ampelanlagen oder Bahnübergängen ausgeschaltet werden könnte. Eine Überführung in die Schutzposition könnte in einem solchen Fall unerwünscht sein. Die Auswerte- und Steuereinheit wird auch hierbei zweckmäßig deaktiviert, wenn der Zündschalter des Kraftfahrzeugs auf eine Einschaltposition gestellt wird.

Bei Kraftfahrzeugen mit Passive Entry/Start System kann die Auswerte- und Steuereinheit mit diesem System gekoppelt werden, so dass die Auswerte- und Steuereinheit aktiviert wird, wenn ein gültiger ID-Geber das Kraftfahrzeug verlässt. Selbstverständlich wird die Auswerte- uns Steuereinheit deaktiviert, wenn ein gültiger ID-Geber in dem Kraftfahrzeug detektiert wird.

Es kann vorgesehen sein, dass die Verschwenkung des Spiegels benutzerabhängig gesteuert wird, also mit an sich bekannten Mitteln personalisierbar ist.

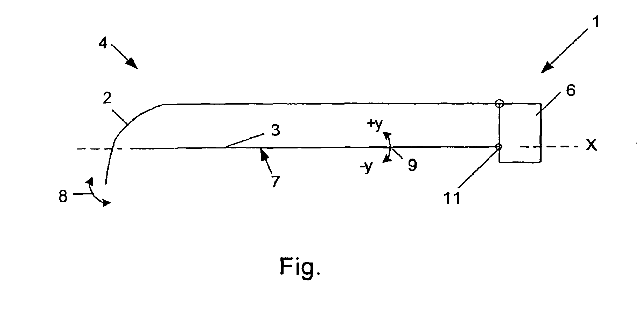

Die Erfindung wird im Folgenden anhand eines Ausführungsbeispieles unter Bezugnahme auf die zugehörige Zeichnung näher erläutert. Die einzige Fig. der Zeichnung zeigt einen erfindungsgemäßen Außenspiegel eines Kraftfahrzeuges.

Der Außenspiegel 1 weist ein einseitig offenes Gehäuse 2 auf, in dem ein Spiegelglas 3 in verschiedenen Positionen einstellbar aufgenommen ist. In dem dargestellten Ausführungsbeispiel steht der Außenspiegel 1 in einer Gebrauchsposition 4 von dem Kraftfahrzeug ab, wobei der Außenspiegel 1 in bekannter Weise mit einer Befestigungsseite 6 fahrer- bzw. beifahrerseitig mit dem Kraftfahrzeug verbunden ist. Mit seiner Spiegelfläche 7 weist das Spiegelglas 3 in Richtung zu einem Kraftfahrzeugheck. Der Außenspiegel 1 ist aus der Gebrauchsposition 4 in eine Parkposition schwenkbar. Dies ist mittels des Doppelpfeils 8 dargestellt. Hierzu ist ein elektrischer Antrieb vorgesehen, der in herkömmlicher Weise an dem Außenspiegel 1 angeordnet ist. In der Parkposition liegt der Außenspiegel 1 an einer Seitenscheibenfläche an. Dabei wird der Begriff der Seitenscheibenfläche weit aufgefasst, so dass abhängig vom Kraftfahrzeugdesign auch ein Teil einer Kunststoffabdeckung oder zusätzlich ein Teil eines Kraftfahrzeugblechteils darunter fallen kann.

Der elektrische Antrieb bewegt den Außenspiegel 1 derart um eine Querachse X-X in eine in Y-Richtung orientierte Schutzposition, dass zumindest das Spiegelglas 3 mit seiner Spiegelfläche 7 zu einem Boden weist. Diese Bewegung ist mittels des Doppelpfeils 9 dargestellt. Hierzu weist das Spiegelglas 3 zumindest einen Drehpunkt 11 auf, der in dem dargestellten Ausführungsbeispiel in der Nähe der Befestigungsseite 6 angeordnet ist. Natürlich kann auch vorgesehen sein, dass auch das Gehäuse 2 um die Querachse X-X drehbar ist, so dass das Gehäuse 2 mit seiner offene Seite zum Boden weist. Hierbei ist es selbstverständlich möglich, das Gehäuse 2 bzw. das Spiegelglas 3 separat voneinander und/oder miteinander in Richtung des Doppelpfeils 9 zu verdrehen. Das an dem einen Pfeilende des Doppelpfeils 9 angeordnete Bezugszeichen -y stellt hierbei eine Verdrehung in die Schutzposition dar, wobei das an dem gegenüberliegenden anderen Pfeilende des Doppelpfeils 9 angeordnete Bezugszeichen +y eine Verdrehung in die in Gebrauchsposition 4 darstellt.

Dem elektrischen Antrieb ist eine Auswerte- und Steuereinheit zugeordnet, die aktivierbar bzw. deaktivierbar ist. Der Auswerte- und Steuereinheit ist ein Regensensor zugeordnet. Detektiert die Auswerte- und Steuereinheit im aktivierten Modus Niederschlag bzw. Regen, wird ein Steuersignal erzeugt. Das Steuersignal veranlasst den elektrischen Antrieb, den Außenspiegel 1 in seine Schutzposition zu überführen. Wird die Auswerte- und Steuereinheit deaktiviert, wird ein Steuersignal erzeugt, welches den elektrischen Antrieb veranlasst, den Außenspiegel in die Gebrauchsposition 4 zu überführen, so dass der Außenspiegel 1 seine Funktion als Rückblickspiegel erfüllen kann.

Der Außenspiegel 1 ist in der Schutzposition zudem in die Parkposition überführbar. Hierzu wird vorzugsweise zunächst das Spiegelglas 3 in die Schutzposition gedreht, wobei anschließend das Gehäuse 2 in die Parkposition überführt wird. Möglich ist, dass das Spiegelglas 3 unabhängig von der Witterung in die Schutzposition gedreht wird, wenn der Außenspiegel 1 in die Parkposition überführt wird. Möglich ist auch, dass das Spiegelglas 3 unabhängig von einer Überführung des Außenspiegels 1 in die Parkposition in seine Schutzposition gedreht wird.

Die Auswerte- und Steuereinheit ist in bekannter Weise in eine Kraftfahrzeugelektronik über einen Kraftfahrzeugbus eingebunden. Bei dem Kraftfahrzeugbus handelt es sich um einen üblichen Bustyp, der im Stand der Technik üblicherweise eingesetzt wird. Dies ist in der Regel ein CAN-Bus. Durch Auswerten der Witterungsbedingungen, insbesondere der Niederschlagsverhältnisse ist ein Drehen in die Schutzposition realisierbar.

## Patentansprüche

1. Anklappbarer Außenspiegel für ein Kraftfahrzeug mit einem einseitig offenen Gehäuse (2), in dem ein Spiegelglas (3) in verschiedenen Positionen einstellbar aufgenommen ist, wobei dem Außenspiegel (1) ein elektrischer Antrieb zugeordnet ist, so dass der Außenspiegel (1) aus einer Gebrauchsposition (4) in eine Parkposition bewegbar ist, **dadurch gekennzeichnet, dass** der elektrische Antrieb den Außenspiegel (1) derart um eine Querachse (X-X) in eine in y-Richtung orientierte Schutzposition bewegt, dass zumindest das Spiegelglas (3) mit seiner Spiegelfläche (7) zu einem Boden weist.

2. Anklappbarer Außenspiegel nach Anspruch 1, **dadurch gekennzeichnet, dass** der elektrische Antrieb das Spiegelglas (3) und/oder das Gehäuse (2) um die Querachse (X-X) mit seiner Spiegelfläche (7) und/oder die einseitige Öffnung des Gehäuses (2) in y-Richtung zum Boden dreht wobei anschließend das Gehäuse (2) in die Parkposition überführbar ist.

3. Anklappbarer Außenspiegel nach Anspruch 1 oder 2, **dadurch gekennzeichnet, dass** dem elektrischen Antrieb eine Auswerte- und Steuereinheit zugeordnet ist, die manuell aktivierbar und/oder deaktivierbar ist, so dass die Auswerte- und Steuereinheit im aktivierten bzw. deaktivierten Modus den elektrischen Antrieb mit einem entsprechenden Steuersignal dazu veranlasst den Außenspiegel (1) in die Schutzposition bzw. in die Gebrauchsposition (4) zu überführen.

4. Anklappbarer Außenspiegel nach einem der vorhergehenden Ansprüche, **dadurch gekennzeichnet, dass** dem elektrischen Antrieb eine Auswerte- und Steuereinheit derart zugeordnet ist, dass der elektrische Antrieb aufgrund eines Steuersignals eine Überführung in die Schutzposition bewirkt, wobei die Auswerte- und Steuereinheit aktiviert wird, wenn das Kraftfahrzeug verriegelt wird.

5. Anklappbarer Außenspiegel nach Anspruch 4, **dadurch gekennzeichnet, dass** die Auswerte- und Steuereinheit deaktiviert wird, wenn das Kraftfahrzeug entriegelt wird.

6. Anklappbarer Außenspiegel, nach einem der vorhergehenden Ansprüche, **dadurch gekennzeichnet, dass** dem elektrischen Antrieb eine Auswerte- und Steuereinheit derart zugeordnet ist, dass der elektrische Antrieb aufgrund eines Steuersignals eine Überführung in die Schutzposition bewirkt, wobei die Auswerte- und Steuereinheit zeitverzögert (timergesteuert) aktiviert wird, wenn ein Zündschalter des Kraftfahrzeugs auf eine Ausschaltposition gestellt ist.

7. Anklappbarer Außenspiegel, nach Anspruch 6, **dadurch gekennzeichnet, dass** die Auswerte- und Steuereinheit deaktiviert wird, wenn der Zündschalter des Kraftfahrzeugs auf eine Einschaltposition gestellt ist.

8. Anklappbarer Außenspiegel nach einem der vorhergehenden Ansprüche, **dadurch gekennzeichnet, dass** dem elektrische Antrieb eine Auswerte- und Steuereinheit derart zugeordnet ist, dass der elektrische Antrieb aufgrund eines Steuersignals eine Überführung in die Schutzposition bewirkt, wobei die Auswerte- und Steuereinheit aktiviert wird, wenn bei einem Kraftfahrzeug mit einem Passive-Entry/Start System ein gültiger ID-Geber das Kraftfahrzeug verlässt.

9. Anklappbarere Außenspiegel nach Anspruch 8, **dadurch gekennzeichnet, dass** die Auswerte- und Steuereinheit deaktiviert wird, wenn bei dem Kraftfahrzeug mit einem Passive-Entry/Start System ein gültiger ID-Geber in dem Kraftfahrzeug detektiert wird.

10. Anklappbarer Außenspiegel nach einem der vorhergehenden Ansprüche, **dadurch gekennzeichnet, dass** dem elektrischen Antrieb eine Auswerte- und Steuereinheit zugeordnet ist, die als Niederschlag-Sensor ausgestaltet ist.

## Claims

1. Folding rear view mirror for a motor vehicle with a casing open on one side (2) in which a mirror glass (3), adjustable to various positions, is placed; wherein the rear view mirror (1) is configured with an electrical actuation so that the rear view mirror (1) is adjustable from a use position into a park position, **characterized in that** the electrical actuation of the rear view mirror (1) moves in such a way around a diagonal axis (X-X) into a Y-direction oriented safety position; as a result, at least the mirror glass (3) with its mirror surface (7) points downward.

2. Folding rear view mirror according to claim 1, **characterized in that** the electrical actuation of the mirror glass (3) and/or the casing (2) turns around the diagonal axis (X-X) with its mirror surface (7) and/or the one-sided opening of the casing (2) in a Y-direction to the floor, wherein the casing (2) can then be transferred into the park position.

3. Folding rear view mirror according to claim 1 or 2, **characterized in that** the electrical actuation corresponds to a utilization and steering unit which can be manually activated and/or deactivated; in this way, the utilization and steering unit, in an activated or deactivated mode, and with a corresponding steering signal, causes the rear view window (1) to be transferred into the safety position or to the use position (4).

4. Folding rear view mirror according to one of the previous claims, **characterized in that** the electrical actuation of the utilization and steering unit is designed in such a way that the electrical actuation activates a transfer into the safety position because of a steering signal, wherein the utilization and steering unit is activated when the motor vehicle is locked.

5. Folding rear view mirror according to claim 4, **characterized in that** the utilization and steering unit is deactivated when the motor vehicle is unlocked.

6. Folding rear view mirror according to one of the previous claims, **characterized in that** the electrical actuation of a utilization and steering unit is designed in such a way that the electrical actuation, because of a steering signal, activates the transfer into a safety position, wherein the utilization and steering unit is activated in a time-delayed way (by timer) when an ignition switch of the motor vehicle is set to an off position.

7. Folding rear view mirror according to claim 6, **characterized in that** the utilization and steering unit is deactivated when the motor vehicle ignition switch is set to an on position.

8. Folding rear view mirror according to one of the previous claims, **characterized in that** the electrical actuation of a utilization and steering unit is designed in such a way that the electrical actuation causes, because of a steering signal, a transfer into the safety position, wherein the utilization and steering unit is activated when a valid ID-provider leaves a motor vehicle with a passive-entry/start system.

9. Folding rear view mirror according to claim 8, **characterized in that** the utilization and steering unit is deactivated when, in a motor vehicle with a passive-entry/start system, a valid ID-provider is detected in the motor vehicle.

10. Folding rear view mirror according to one of the previous claims, **characterized in that** the electrical actuation is designed for a utilization and steering unit, which is configured as a condensation-sensor.

## Revendications

1. Rétroviseur extérieur rabattable pour véhicule comprenant un boîtier (2) ouvert d'un coté, dans lequel est incorporé un verre à glace (3) qui peut être ajuster dans différentes positions, étant donné qu'une commande électrique est attribuée au rétroviseur extérieur (1) de telle façon que le rétroviseur extérieur (1) peut être déplacé d'une position d'utilisation (4) à une position de stationnement, **caractérisé en ce que** la commande électrique déplace le rétroviseur extérieur (1) autour d'un axe transversal (x - x) vers une position de protection dans la direction y, de telle façon qu'au moins le verre à glace (3) avec sa surface réfléchissante (7) montre vers un fond.

2. Rétroviseur extérieur rabattable selon revendication 1, **caractérisé en ce que** la commande électrique fait tourner le verre à glace (3) et/ou le boîtier (2) vers le fond autour de l'axe transversal (x - x) avec sa surface réfléchissante (7) et/ou l'ouverture unilatérale du boîtier (2) dans la direction y, étant donné qu'ensuite le boîtier (2) peut être mené dans la position du stationnement.

3. Rétroviseur extérieur rabattable selon revendication 1 ou 2 **caractérisé en ce que** la commande électrique dispose d'une unité dévaluation et de commande, qui peut être activée et/ou désactivée manuellement, de telle manière que l'unité d'évaluation et de commande à l'état activé reps. désactivé fait inciter, avec un signal de commande correspondant, la commande électrique à remettre le Rétroviseur extérieur (1) à la position de protection reps. à la position d'utilisation (4).

4. Rétroviseur extérieur rabattable selon l'une des revendications précédentes **caractérisé en ce que** la commande électrique est menue d'une unité d'évaluation et de commande de telle manière que, la commande électrique en vertu d'un signal de commande, permet un transfert à la position de protection étant donné que l'unité d'évaluation et de commande est activée si le véhicule est verrouillé.

5. Rétroviseur extérieur rabattable selon revendication 4, **caractérisé en ce que** l'unité d'évaluation et de commande est désactivée, si le véhicule est déverrouillé.

6. Rétroviseur extérieur rabattable selon l'une des revendications précédentes **caractérisé en ce que** la commande électrique est menue d'une unité d'évaluation et de commande de telle sorte que, la commande électrique en vertu d'un signal de commande, permet un transfert à la position de protection étant donné que l'unité dévaluation et de commande est activée retardée (minuterie commandée), si un contacteur d'allumage du véhicule est placé en position de mise hors marche.

7. Rétroviseur extérieur rabattable selon revendication 6, **caractérisé en ce que** l'unité d'évaluation et de commande est désactivée, si le contacteur d'allumage du véhicule est placé en position de mise hors marche.

8. Rétroviseur extérieur rabattable selon l'une des revendications précédentes **caractérisé en ce que** la commande électrique est menue d'une unité d'évaluation et de commande de telle sorte que, la commande électrique en vertu d'un signal de commande, permet un transfert à la position de protection étant donné que l'unité d'évaluation et de commande est activée, si dans le cas d'un véhicule avec un système entrée/démarrage passif, un émetteur ID valable quitte le véhicule.

9. Rétroviseur extérieur rabattable selon revendication 8, **caractérisé en ce que** l'unité d'évaluation et de commande est désactivée, si dans le cas d'un véhicule avec un système entrée/démarrage passif, un émetteur ID valable est détecté dans le véhicule.

10. Rétroviseur extérieur rabattable selon l'une des revendications précédentes **caractérisé en ce que** la commande électrique dispose d'une unité d'évaluation et de commande, qui est arrangée comme capteur pluviométrique.
